(19)

**Europäisches Patentamt**
**European Patent Office**
**Office européen des brevets**

(11) **EP 4 757 209 A1**

(12) **EUROPEAN PATENT APPLICATION**

(43) Date of publication:
**10.06.2026 Bulletin 2026/24**

(21) Application number: **25220632.1**

(22) Date of filing: **04.12.2025**

(51) International Patent Classification (IPC):
***H04B 10/516*** (2013.01)    ***H04J 14/00*** (2006.01)
***H04J 14/06*** (2006.01)    ***H04Q 11/00*** (2006.01)

(52) Cooperative Patent Classification (CPC):
**H04J 14/05; H04B 10/5161; H04J 14/06;**
**H04Q 11/0062;** H04Q 2011/0077

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **05.12.2024 US 202418969673**

(71) Applicant: **Nokia Solutions and Networks Oy**
**02610 Espoo (FI)**

(72) Inventor: **CHE, Di**
**Union (US)**

(74) Representative: **Nokia EPO representatives**
**Nokia Technologies Oy**
**Karakaari 7**
**02610 Espoo (FI)**

(54) **COMMUNICATION OF WAVELENGTH CHANNELS BASED ON LABELING OF WAVELENGTH CHANNELS**

(57)    Various example embodiments of a wavelength division multiplexing (WDM) direct detection (DD) system are presented. The WDM DD system may be configured to support WDM within the context of any WDM system supporting communication of wavelength channels based on modulation formats recoverable by direct detection (e.g., based on intensity-modulated (IM) signals within the context of a WDM IM-DD system, single-sideband (SSB) signals within the context of a WDM SSB-DD system, or the like). The WDM DD system may be configured to support WDM within the context of a WDM DD system, based on labeling of the wavelength channels with a set of states of spatial mode and polarization (SoSPs), based on use of an SoSP labeler on the transmit side to associate SoSPs with the wavelength channels and based on use of a receiver on the receive side to detect the SoSPs and recover the wavelength channels based on the SoSPs.

**EP 4 757 209 A1**

# EP 4 757 209 A1

**Description**

<u>TECHNICAL FIELD</u>

Various example embodiments relate generally to optical communication systems and, more particularly but not exclusively, to supporting communication of wavelength channels in optical communication systems.

<u>BACKGROUND</u>

Various communications technologies may be used to support communications in various types of communication systems.

<u>SUMMARY</u>

In at least some example embodiments, an apparatus includes a labeler configured to combine a set of wavelength channels, in a manner for associating a respective set of states of spatial mode and polarization (SoSPs) with the wavelength channels, to form a combined optical signal for propagation over an optical network. In at least some example embodiments, the set of wavelength channels includes a set of wavelength channels using modulation capable of being recovered by direct detection. In at least some example embodiments, the set of wavelength channels is modulated to form a set of intensity-modulated signals or a set of single-sideband signals. In at least some example embodiments, the SoSPs are associated with the respective wavelength channels based on a respective set of SoSP labels defining a respective set of optical modes defined, and the set of optical modes is defined based on a set of combinations of a set of spatial modes and a set of polarizations. In at least some example embodiments, the SoSPs are based on a high-dimensional Jones vector or a generalized Stokes vector. In at least some example embodiments, the labeler includes a set of D ports corresponding to a set of D combinations of a set of S spatial modes and a set of P polarizations, wherein S x P = D, and the labeler also includes a set of S polarization combiners each configured to combine respective sets of signals of each of the P polarizations. In at least some example embodiments, the D combinations of the set of S spatial modes and the set of P polarizations correspond to D respective optical modes in high-dimensional Jones space. In at least some example embodiments, the set of wavelength channels includes C wavelength channels, wherein: a first subset of the set of wavelength channels, including D wavelength channels from the C wavelength channels which are associated with D self-product terms of the SoSPs, are provided directly to respective ones of the D ports; and a second subset of the set of wavelength channels, including C - D wavelength channels from the C wavelength channels which are associated with C - D cross-product terms of the SoSPs, are each split to provide a respective pair of split signals and the respective pair of split signals is provided to a respective pair of ports of the D ports. In at least some example embodiments, for at least one of the C - D wavelength channels, the respective pair of split signals is provided to a respective pair of ports of the D ports with a phase offset therebetween. In at least some example embodiments, the labeler includes a spatial mode combiner configured to combine a respective set of S outputs of the set of S polarization combiners to provide the combined optical signal for propagation over the optical fiber. In at least some example embodiments, the labeler is configured to combine the set of wavelength channels to form the combined optical signal based on at least one of: a fiber-based or free-space implementation including at least one power splitter, at least one phase shifter, at least one polarization beam combiner, and at least one spatial mode combiner; a photonic integrated circuit implementation including at least one power splitter, at least one phase shifter, at least one polarization beam combiner, and at least one spatial mode combiner; or a set of multiple phase plates configured to redistribute optical power of the wavelength channels to a target mode profile. In at least some example embodiments, a method includes combining a set of wavelength channels, based on a respective set of states of spatial mode and polarization (SoSPs), to form a combined optical signal, wherein the wavelength channels are combined in a manner for associating the respective SoSPs with the wavelength channels, and propagating the combined optical signal for propagation over an optical network. In at least some example embodiments, an apparatus includes means for combining a set of wavelength channels, in a manner for associating a respective set of states of spatial mode and polarization (SoSPs) with the wavelength channels, to form a combined optical signal for propagation over an optical network. In at least some example embodiments, an apparatus includes means for combining a set of wavelength channels, based on a respective set of states of spatial mode and polarization (SoSPs), to form a combined optical signal, wherein the wavelength channels are combined in a manner for associating the respective SoSPs with the wavelength channels, and means for propagating the combined optical signal for propagation over an optical network. It will be appreciated that these example embodiments, although primarily described individually for purposes of clarity, may be used in various combinations, such that various combinations of the appended claims which correspond to these example embodiments are considered to be contemplated.

In at least some example embodiments, which may be used in combination with any of the foregoing and/or following example embodiments, an apparatus includes a labeler configured to combine a set of wavelength channels, in a manner for associating a respective set of states of spatial mode and polarization (SoSPs) with the wavelength channels, to form a combined optical signal for propagation over an optical network. In at least some example embodiments, which may be used in combination with any of the foregoing and/or following example embodiments, the set of wavelength channels includes a set of wavelength channels using modulation capable of being recovered by direct detection. In at least some example embodiments, which may be used in combination with any of the foregoing and/or following example embodiments, the set of wavelength channels is modulated to form a set of intensity-modulated signals or a set of single-sideband signals. In at least some example embodiments, which may be used in combination with any of the foregoing and/or following example embodiments, the SoSPs are associated with the respective wavelength channels based on a respective set of SoSP labels defining a respective set of optical modes defined, and the set of optical modes is defined based on a set of combinations of a set of spatial modes and a set of polarizations. In at least some example embodiments, which may be used in combination with any of the foregoing and/or following example embodiments, the SoSPs are based on a high-dimensional Jones vector or a generalized Stokes vector. In at least some example embodiments, which may be used in combination with any of the foregoing and/or following example embodiments, the labeler includes a set of D ports corresponding to a set of D combinations of a set of S spatial modes and a set of P polarizations, wherein $S \times P = D$, and the labeler also includes a set of S polarization combiners each configured to combine respective sets of signals of each of the P polarizations. In at least some example embodiments, which may be used in combination with any of the foregoing and/or following example embodiments, the D combinations of the set of S spatial modes and the set of P polarizations correspond to D respective optical modes in high-dimensional Jones space. In at least some example embodiments, which may be used in combination with any of the foregoing and/or following example embodiments, the set of wavelength channels includes C wavelength channels, wherein: a first subset of the set of wavelength channels, including D wavelength channels from the C wavelength channels which are associated with D self-product terms of the SoSPs, are provided directly to respective ones of the D ports; and a second subset of the set of wavelength channels, including C - D wavelength channels from the C wavelength channels which are associated with C - D cross-product terms of the SoSPs, are each split to provide a respective pair of split signals and the respective pair of split signals is provided to a respective pair of ports of the D ports. In at least some example embodiments, which may be used in combination with any of the foregoing and/or following example embodiments, for at least one of the C - D wavelength channels, the respective pair of split signals is provided to a respective pair of ports of the D ports with a phase offset therebetween. In at least some example embodiments, which may be used in combination with any of the foregoing and/or following example embodiments, the labeler includes a spatial mode combiner configured to combine a respective set of S outputs of the set of S polarization combiners to provide the combined optical signal for propagation over the optical fiber. In at least some example embodiments, which may be used in combination with any of the foregoing and/or following example embodiments, the labeler is configured to combine the set of wavelength channels to form the combined optical signal based on at least one of: a fiber-based or free-space implementation including at least one power splitter, at least one phase shifter, at least one polarization beam combiner, and at least one spatial mode combiner; a photonic integrated circuit implementation including at least one power splitter, at least one phase shifter, at least one polarization beam combiner, and at least one spatial mode combiner; or a set of multiple phase plates configured to redistribute optical power of the wavelength channels to a target mode profile. In at least some example embodiments, which may be used in combination with any of the foregoing and/or following example embodiments, a method includes combining a set of wavelength channels, based on a respective set of states of spatial mode and polarization (SoSPs), to form a combined optical signal, wherein the wavelength channels are combined in a manner for associating the respective SoSPs with the wavelength channels, and propagating the combined optical signal for propagation over an optical network. In at least some example embodiments, which may be used in combination with any of the foregoing and/or following example embodiments, an apparatus includes means for combining a set of wavelength channels, in a manner for associating a respective set of states of spatial mode and polarization (SoSPs) with the wavelength channels, to form a combined optical signal for propagation over an optical network. In at least some example embodiments, which may be used in combination with any of the foregoing and/or following example embodiments, an apparatus includes means for combining a set of wavelength channels, based on a respective set of states of spatial mode and polarization (SoSPs), to form a combined optical signal, wherein the wavelength channels are combined in a manner for associating the respective SoSPs with the wavelength channels, and means for propagating the combined optical signal for propagation over an optical network. It will be appreciated that these example embodiments, although primarily described individually for purposes of clarity, may be used in various combinations, such that various combinations of the appended claims which correspond to these example embodiments are considered to be contemplated.

In at least some example embodiments, an apparatus includes a receiver configured to receive a combined optical signal including a set of wavelength channels and, based on a respective set of states of spatial mode and polarization (SoSPs) associated with the wavelength channels, generate a set of signals, and a multiple input multiple output (MIMO) equalizer configured to, based on processing of the set of signals based on a MIMO equalization process, recover the set of wavelength channels. In at least some example embodiments, the set of wavelength channels includes a set of wavelength channels using modulation capable of being recovered by direct detection. In at least some example embodiments, the receiver is configured to detect respective optical powers of the SoSPs to generate the set of signals. In at least some example embodiments, the receiver includes a generalized Stokes receiver configured to detect the SoSPs in a generalized Stokes space based on direct detection. In at least some example embodiments, the receiver includes: a set of splitters, including at least one spatial mode splitter configured to split a set of spatial modes of the SoSPs and at least one polarization splitter configured to split a set of polarizations of the SoSPs, configured to produce a set of signals including a first set of signals associated with a set of self-product terms of the SoSPs and a second set of signals associated with a set of cross-product terms of the SoSPs; a set of optical hybrids configured to mix pairs of signals from the second set of signals associated with the set of cross-product terms of the SoSPs to produce a respective set of mixed pairs of cross-product terms of the SoSPs; and a set of detectors, including a first set of detectors configured to directly detect the first set of signals associated with a set of self-product terms of the SoSPs from the set of splitters and a second set detectors configured to detect the respective mixed pairs of cross-product terms of the SoSPs from the optical hybrids. In at least some example embodiments, the set of signals includes a set of photocurrents, and the MIMO equalizer includes an analog MIMO equalizer configured to recover the set of wavelength channels based on the set of photocurrents. In at least some example embodiments, the set of signals includes a set of digital signals produced by a set of analog-to-digital converters based on a set of photocurrents generated by the receiver, and the MIMO equalizer includes a digital MIMO equalizer configured to recover the set of wavelength channels based on the set of digital signals. In at least some example embodiments, the apparatus further includes a low pass filtering capability configured to apply low pass filtering between the receiver and the MIMO equalizer. In at least some example embodiments, the low pass filtering has a low pass filtering bandwidth that is wider than a per-channel signal bandwidth and narrower than a minimum channel spacing. In at least some example embodiments, the MIMO equalization process includes a single-step MIMO equalization process. In at least some example embodiments, the MIMO equalization process includes a multi-step MIMO equalization process. In at least some example embodiments, the MIMO equalization process includes at least one of a zero-forcing algorithm, a least mean square (LMS) algorithm, a recursive least square (RLS) algorithm, a training-added algorithm, a decision-directed algorithm, or a successive interference cancellation algorithm. In at least some example embodiments, a method includes receiving, by a receiver, a combined optical signal including a set of wavelength channels, generating, by the receiver based on a respective set of states of spatial mode and polarization (SoSPs) associated with the wavelength channels, a set of signals, and recovering, by a multiple input multiple output (MIMO) equalizer based on processing of the set of signals using a MIMO equalization process, the set of wavelength channels. In at least some example embodiments, an apparatus includes means for receiving a combined optical signal including a set of wavelength channels and, based on a respective set of states of spatial mode and polarization (SoSPs) associated with the wavelength channels, generating a set of signals, and means for, based on processing of the set of signals based on a MIMO equalization process, recovering the set of wavelength channels. In at least some example embodiments, an apparatus includes means for receiving a combined optical signal including a set of wavelength channels, means for generating, based on a respective set of states of spatial mode and polarization (SoSPs) associated with the wavelength channels, a set of signals, and means for recovering, based on processing of the set of signals using a MIMO equalization process, the set of wavelength channels. It will be appreciated that these example embodiments, although primarily described individually for purposes of clarity, may be used in various combinations, such that various combinations of the appended claims which correspond to these example embodiments are considered to be contemplated.

In at least some example embodiments, which may be used in combination with any of the foregoing and/or following example embodiments, an apparatus includes a receiver configured to receive a combined optical signal including a set of wavelength channels and, based on a respective set of states of spatial mode and polarization (SoSPs) associated with the wavelength channels, generate a set of signals, and a multiple input multiple output (MIMO) equalizer configured to, based on processing of the set of signals based on a MIMO equalization process, recover the set of wavelength channels. In at least some example embodiments, which may be used in combination with any of the foregoing and/or following example embodiments, the set of wavelength channels includes a set of wavelength channels using modulation capable of being recovered by direct detection. In at least some example embodiments, which may be used in combination with any of the foregoing and/or following example embodiments, the receiver is configured to detect respective optical powers of the SoSPs to generate the set of signals. In at least some example embodiments, which may be used in combination with any of the foregoing and/or following example embodiments, the receiver includes a generalized Stokes receiver configured to detect the SoSPs in a generalized Stokes space based on direct detection. In at least some example embodiments, which may be used in combination with any of the foregoing and/or following example embodiments, the receiver includes: a set of splitters, including at least one spatial mode splitter configured to split a set of spatial modes of the SoSPs and at least one polarization splitter configured to split a set of polarizations of the SoSPs, configured to produce a set of signals including a first set of signals associated with a set of self-product terms of the SoSPs and a second set of signals associated with a set of cross-product terms of the SoSPs; a set of optical hybrids configured to mix pairs of signals from the second set of signals associated with the set of cross-product terms of the SoSPs to produce a respective set of mixed pairs of cross-product terms of the SoSPs; and a set of detectors, including a first set of detectors configured to directly detect the first set of signals associated with a set of self-product terms of the SoSPs from the set of splitters and a second set detectors configured to detect the respective mixed pairs of cross-product terms of the SoSPs from the optical hybrids. In at least some example embodiments, which may be used in combination with any of the foregoing and/or following example embodiments, the set of signals includes a set of photocurrents, and the MIMO equalizer includes an analog MIMO equalizer configured to recover the set of wavelength channels based on the set of photocurrents. In at least some example embodiments, which may be used in combination with any of the foregoing and/or following example embodiments, the set of signals includes a set of digital signals produced by a set of analog-to-digital converters based on a set of photocurrents generated by the receiver, and the MIMO equalizer includes a digital MIMO equalizer configured to recover the set of wavelength channels based on the set of digital signals. In at least some example embodiments, which may be used in combination with any of the foregoing and/or following example embodiments, the apparatus further includes a low pass filtering capability configured to apply low pass filtering between the receiver and the MIMO equalizer. In at least some example embodiments, which may be used in combination with any of the foregoing and/or following example embodiments, the low pass filtering has a low pass filtering bandwidth that is wider than a per-channel signal bandwidth and narrower than a minimum channel spacing. In at least some example embodiments, the MIMO equalization process includes a single-step MIMO equalization process. In at least some example embodiments, which may be used in combination with any of the foregoing and/or following example embodiments, the MIMO equalization process includes a multi-step MIMO equalization process. In at least some example embodiments, which may be used in combination with any of the foregoing and/or following example embodiments, the MIMO equalization process includes at least one of a zero-forcing algorithm, a least mean square (LMS) algorithm, a recursive least square (RLS) algorithm, a training-added algorithm, a decision-directed algorithm, or a successive interference cancellation algorithm. In at least some example embodiments, which may be used in combination with any of the foregoing and/or following example embodiments, a method includes receiving, by a receiver, a combined optical signal including a set of wavelength channels, generating, by the receiver based on a respective set of states of spatial mode and polarization (SoSPs) associated with the wavelength channels, a set of signals, and recovering, by a multiple input multiple output (MIMO) equalizer based on processing of the set of signals using a MIMO equalization process, the set of wavelength channels. In at least some example embodiments, which may be used in combination with any of the foregoing and/or following example embodiments, an apparatus includes means for receiving a combined optical signal including a set of wavelength channels and, based on a respective set of states of spatial mode and polarization (SoSPs) associated with the wavelength channels, generating a set of signals, and means for, based on processing of the set of signals based on a MIMO equalization process, recovering the set of wavelength channels. In at least some example embodiments, which may be used in combination with any of the foregoing and/or following example embodiments, an apparatus includes means for receiving a combined optical signal including a set of wavelength channels, means for generating, based on a respective set of states of spatial mode and polarization (SoSPs) associated with the wavelength channels, a set of signals, and means for recovering, based on processing of the set of signals using a MIMO equalization process, the set of wavelength channels. It will be appreciated that these example embodiments, although primarily described individually for purposes of clarity, may be used in various combinations, such that various combinations of the appended claims which correspond to these example embodiments are considered to be contemplated.

## BRIEF DESCRIPTION OF THE DRAWINGS

The teachings herein can be readily understood by considering the following detailed description in conjunction with the accompanying drawings, in which:

FIG. 1 depicts an example embodiment of an optical communication system, such as a wavelength division multiplexing (WDM) intensity-modulation - direct detection (IM-DD) system, configured to support communication of wavelength channels based on labeling of the wavelength channels using states of spatial mode and polarization (SoSPs);

FIG. 2 depicts an example embodiment of a transmitter configured for use in a WDM IM-DD system to support multiplexing of IM signals in a manner for associating SoSPs to the IM signals;

FIG. 3 depicts an example embodiment of an SoSP labeler configured to support association of SoSPs with IM signals at a transmitter of a WDM IM-DD system;

FIG. 4 depicts an example embodiment of a method for use at a transmitter to support combining of wavelength channels based on SoSPs;

FIG. 5 depicts an example embodiment of a receiver configured for use in a WDM IM-DD system to support demultiplexing of IM signals based on SoSPs associated with the IM signals;

FIG. 6 depicts an example embodiment of a generalized Stokes receiver (GSR) configured to support detection of SoSPs of wavelength channels at a receiver of a WDM IM-DD system;

FIG. 7 depicts an example embodiment of a method for use at a receiver to support recovery of wavelength channels based on SoSPs; and

FIG. 8 depicts an example embodiment of a computer suitable for use in performing various functions presented herein.

To facilitate understanding, identical reference numerals have been used herein, wherever possible, in order to designate identical elements that are common among the various figures.

DETAILED DESCRIPTION

Various example embodiments of a wavelength division multiplexing (WDM) direct detection (DD) system are presented. The WDM DD system may be configured to support WDM within the context of any WDM system supporting communication of wavelength channels based on modulation formats that may be recovered by direct detection. For example, the WDM DD system may be configured to support communication of wavelength channels based on intensity-modulated (IM) signals within the context of a WDM IM-DD system, single-sideband (SSB) signals within the context of a WDM SSB-DD system, or the like; however, for purposes of clarity, various example embodiments are primarily presented herein within the context of supporting communication of wavelength channels based on IM signals within the context of a WDM IM-DD system. The WDM DD system may be configured to support WDM within the context of a WDM DD system based on labeling of the wavelength channels with a set of states of spatial-mode and polarization (SoSPs). The WDM DD system may be configured to support WDM within the context of a WDM DD system, based on labeling of the wavelength channels with SoSPs, based on use of an SoSP labeler on the transmit side to associate the SoSPs with the wavelength channels and based on use of a receiver on the receive side to detect the SoSPs and recover the wavelength channels based on the SoSPs without a need to identify the wavelengths of the wavelength channels. The WDM DD system may be configured to support WDM within the context of a WDM DD system, based on labeling of the wavelength channels with SoSPs, by replacing the wavelength multiplexer typically used on the transmit side with an SoSP labeler configured to associate the SoSPs with the wavelength channels in a wavelength independent manner. The WDM DD system may be configured to support WDM within the context of a WDM DD system, based on labeling of the wavelength channels with SoSPs, by replacing the wavelength demultiplexer typically used on the receive side with a receiver configured to detect the SoSPs and recover the wavelength channels based on the SoSPs without a need to identify the wavelengths of the wavelength channels. The WDM DD system may be configured to support WDM within the context of DD in a fully colorless manner, thereby obviating the need for use of wavelength-selective elements in the WDM DD system. It will be appreciated that the above-described example embodiments of a WDM DD system, as well as various other example embodiments of a WDM DD system, may be further understood by further considering example embodiments for supporting communication of IM signals within the context of a WDM IM-DD system.

Various example embodiments of a wavelength division multiplexing (WDM) intensity modulation - direct detection (IM-DD) system are presented. The WDM IM-DD system may be configured to support WDM within the context of IM-DD in a fully colorless manner, thereby obviating the need for use of wavelength-selective elements in the WDM IM-DD system. The WDM IM-DD system may be configured to support WDM within the context of IM-DD based on labeling of the wavelength channels with a set of states of spatial mode and polarization (SoSPs). The WDM IM-DD system may be configured to support WDM within the context of IM-DD, based on labeling of the wavelength channels with SoSPs, based on use of an SoSP labeler on the transmit side to label the wavelength channels with SoSPs and based on use of a receiver on the receive side to detect the SoSPs and recover the wavelength channels based on the SoSPs without a need to identify the wavelengths of the wavelength channels. The WDM IM-DD system may be configured to support WDM within the context of IM-DD, based on labeling of the wavelength channels with SoSPs, by replacing the wavelength multiplexer typically used on the transmit side with an SoSP labeler configured to associate the SoSPs with the wavelength channels in a wavelength independent manner. The WDM IM-DD system may be configured to support WDM within the context of IM-DD, based on labeling of the wavelength channels with SoSPs, by replacing the wavelength demultiplexer typically used on the receive side with a receiver configured to detect the SoSPs and recover the wavelength channels based on the SoSPs without a need to identify the wavelengths of the wavelength channels. It will be appreciated that the above-described example embodiments of a WDM IM-DD system, as well as various other example embodiments of a WDM IM-DD system, may be further understood by further considering various aspects of spatial-mode states and polarization states as discussed further below.

Various example embodiments, as noted above, may be configured to provide a fully colorless WDM IM-DD system by obviating the need for any wavelength-selective elements in the WDM IM-DD system based on labeling of the wavelength channels with a set of SoSPs. In a single-mode system, state of polarization (SoP) is typically characterized either by a Jones vector (two optical fields of the orthogonal polarization pair) or by a set Stokes parameter (four intensity detections on the total optical power, and power along 0-degree linear SoP, 45-degree linear SoP, and circular SoP). Jones and Stokes spaces are isomorphic to each other, and each Jones vector corresponds to a Stokes vector. In an SDM system, SoSP is a generalized concept of SoP, which can be characterized by either a high-dimensional Jones vector or a generalized Stokes vector (GSV). It will be appreciated that potential advantages of SoSP labeling include: (1) using GSV, it can be characterized only by optical intensities, which is compatible to DD (namely, a detection without using a local laser for phase reference) and (2) assuming an SDM system supporting D modes, the maximum degree of freedom for SoSP is $D^2$, which increases quadratically (rather than linearly) with D. This takes a much smaller number of spatial modes to label WDM IM-DD channels. At the transmitter, the wavelength multiplexer may be replaced by a wavelength independent SoSP labeler that assigns SoSPs, which are orthogonal to each other, to the WDM channels, respectively. Correspondingly, at the receiver, the wavelength demultiplexer is replaced by a generalized Stokes receiver (GSR) that detects the SoSP in the generalized Stokes space by DD. In other words, the GSR recognizes the labels assigned at the transmitter to separate one WDM channel from another, without the need to identify their wavelengths. A multi-input-multi-output (MIMO) equalizer, taking GSR outputs as inputs, may then use MIMO equalization to separate the WDM IM signals, without the need for colored wavelength demultiplexing.

It will be appreciated that the above-described example embodiments of a WDM IM-DD system configured to support communication of wavelength channels based on SoSP labeling, as well as various other example embodiments of a WDM IM-DD system configured to support communication of wavelength channels based on SoSP labeling and example embodiments of WDM DD systems configured to support communication of wavelength channels based on SoSP labeling, may be further understood by way of reference to the figures and associated description of those figures, which follows.

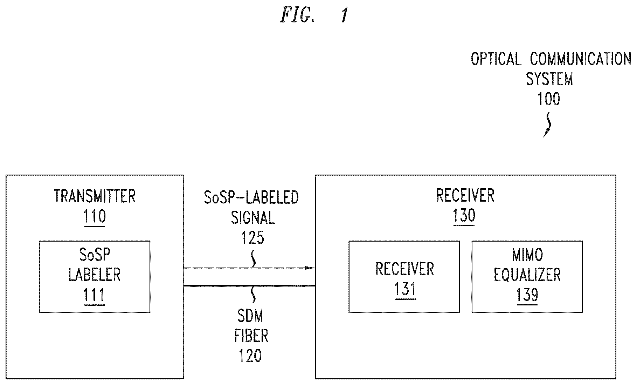

FIG. 1 depicts an example embodiment of an optical communication system, such as a wavelength division multiplexing (WDM) IM-DD system, configured to support communication of wavelength channels based on labeling of the wavelength channels using SoSPs.

The optical communication system 100 may include any optical communication system in which communication of wavelength channels may be supported based on "labeling" of the wavelength channels according to SoSP labels such that the corresponding SoSPs are associated with the wavelength channels. For example, as indicated above and primarily presented herein, the optical communication system 100 may be a WDM IM-DD system in which communication of wavelength channels based on SoSPs is supported based on labeling of IM signals using the SoSPs. For example, the optical communication system may be a WDM SSB-DD system in which communication of wavelength channels based on SoSPs is supported based on labeling of SSB signals using the SoSPs. The optical communication system 100 may be any other type of optical communication system supporting communication of wavelength channels based on modulations recoverable by direct detection techniques, such that communication of wavelength channels based on SoSPs may be supported based on various other signal types which may be employed in various other types of optical communication systems.

The optical communication system 100, as indicated above, may be a WDM DD system such as a WDM IM-DD system. The WDM IM-DD system may be configured to support WDM of wavelength channels within the context of IM-DD-based communications. Generally speaking, WDM IM-DD systems use a combination of WDM techniques and IM-DD techniques to provide relatively simple, high-capacity optical communication systems. Namely, IM-DD techniques and WDM techniques are often combined due to the relative simplicity of IM-DD techniques and the capacity potential afforded by WDM techniques. These characteristics may be advantageous in various optical communications contexts. For example, IM-DD transceivers are often deployed in a variety of short-reach optical interconnect applications due to the relative simplicity of the IM-DD techniques; however, since IM-DD typically only supports signaling on optical intensity and, thus, capacity per lane is limited, IM-DD is often combined with WDM to provide multi-fold increases in capacity per fiber. For example, recent generations of Ethernet standards have specified implementation of WDM IM-DD using 4 WDM channels or 8 WDM channels, and recent 1.6-Tb/s IM-DD products have combined 8 WDM channels each carrying 200-Gb/s data. Additionally, for example, massive integrations WDM IM-DD transceivers are also being considered for emerging interconnect demands among servers and GPUs for large artificial intelligence (AI) / machine learning (ML) training models, targeting terabit-per-second capacity per optical port. These deployment scenarios represent just a few of the potential optical communication contexts for the WDM IM-DD system. It will be appreciated that the optical communication system 100 may be deployed in various other optical communications contexts.

The optical communication system 100 includes a transmitter 110, a space division multiplexing (SDM) fiber 120, and a receiver 130. The optical communication system 100 is configured to support WDM of wavelength channels over a DD-based optical communication system based on "labeling" of the wavelength channels according to SoSP labels such that the corresponding SoSPs, which are based on combinations of a set of spatial modes and a set of polarization modes, are associated with the wavelength channels, thereby enabling multiplexed transport of wavelength channels over optical networks in a colorless manner that does not rely on knowledge of the wavelengths of the wavelength channels. The SoSPs may be associated with the wavelength channels on the transmit side based on the manner in which the wavelength channels are multiplexed for transport over the optical network and may be used to recover the wavelength channels on the receive side.

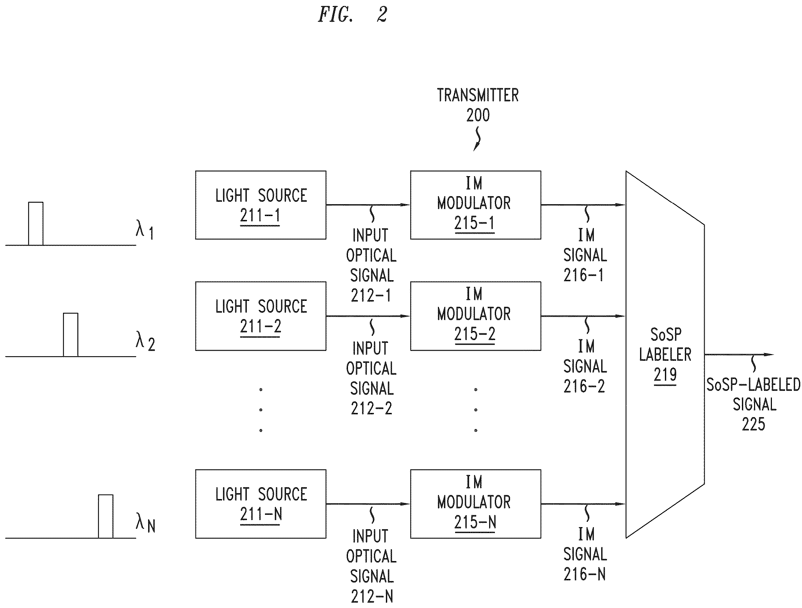

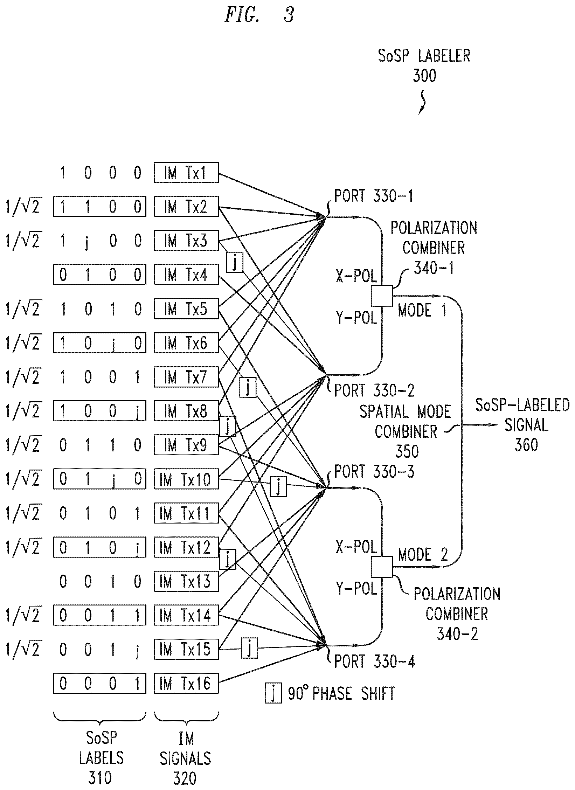

The transmitter 110 may be configured to support WDM of wavelength channels based on association of a set of SoSPs with the wavelength channels. The transmitter 110 may be configured to support WDM of wavelength channels based on association of a set of SoSPs with the wavelength channels based on association of the set of SoSPs with a set of wavelength channels transporting the optical signals (e.g., IM signals in a WDM IM-DD context, SSB signals in a WDM SSB-DD context, or the like). The transmitter 110 may be configured to combine a set of wavelength channels (or optical signals), in a manner for associating a respective set of SoSPs with the wavelength channels, to form a combined optical signal for propagation over an optical network. The transmitter 110 may include an SoSP labeler 111 configured to combine a set of wavelength channels, in a manner for associating a respective set of SoSPs with the wavelength channels, to form a combined optical signal for propagation over an optical network. It will be appreciated that various example embodiments of the transmitter 110 may be further understood by way of reference to FIG. 2 and that various example embodiments of the SoSP labeler 111 may be further understood by way of reference to FIG. 3, which illustrate example embodiments for supporting communication of wavelength channels in a WDM IM-DD system. It will be appreciated that the transmitter 110 may be configured to provide various other functions for supporting WDM of wavelength channels within the context of the optical communication system 100.

The SDM fiber 120 is configured to support propagation of the SoSP-labeled signal 125. The SDM fiber 120 is configured to support propagation of the SoSP-labeled signal 125 from the transmitter 110 to the receiver 130. The SDM fiber 120 may include any fiber or combination of fibers capable of supporting propagation of the SoSP-labeled signal 125 from the transmitter 110 to the receiver 130. For example, the SDM fiber 120 may be a single-mode fiber (SMF) bundle with multiple SMFs supporting multiple spatial modes, a multicore fiber (MCF) having multiple cores supporting multiple spatial modes, a multimode fiber (MMF) supporting multiple spatial modes, or the like, as well as various combinations thereof. It will be appreciated that the SDM fiber 120 may be implemented in other ways for supporting colorless WDM of optical channels in a WDM DD system.

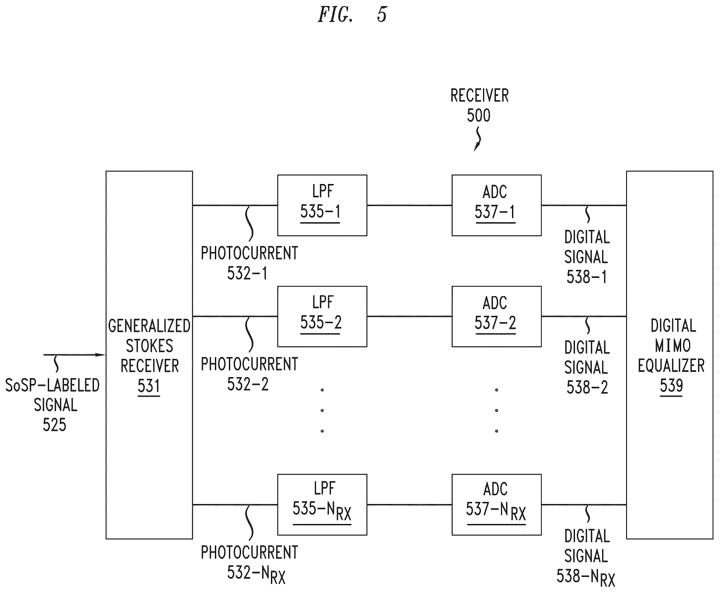

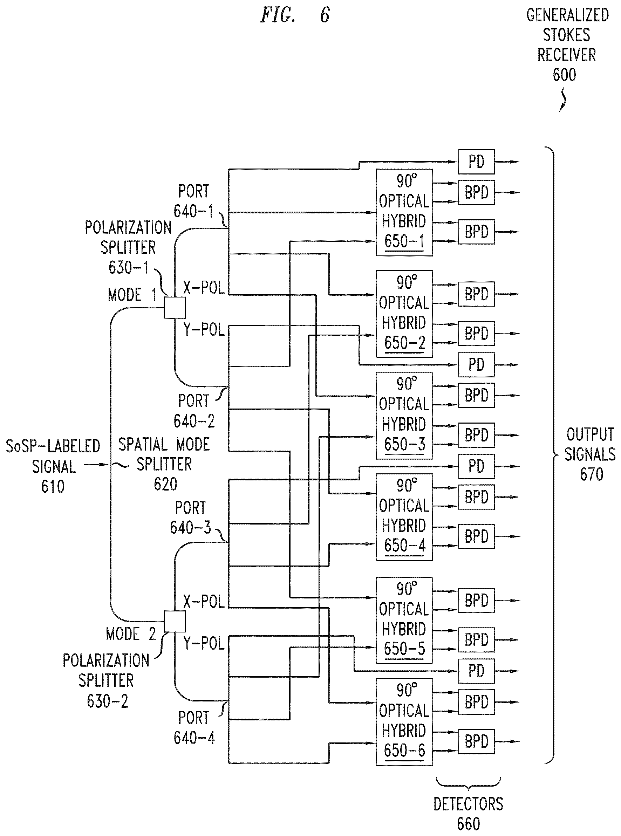

The receiver 130 may be configured to support WDM of wavelength channels based on association of a set of SoSPs with the wavelength channels. The receiver 130 may be configured to support WDM of wavelength channels based on association of a set of SoSPs with the wavelength channels based on association of the set of SoSPs with a set of wavelength channels transporting the optical signals (e.g., IM signals in a WDM IM-DD context, SSB signals in a WDM SSB-DD context, or the like). The receiver 130 may be configured to receive a combined optical signal including a set of wavelength channels (or optical signals) and generate, based on a respective set SoSPs associated with the wavelength channels, a set of signals, and recover, by a multiple input multiple output (MIMO) equalizer based on processing of the set of signals using a MIMO equalization process, the set of wavelength channels. The receiver 130 may include a receiver 131 configured to receive a combined optical signal including a set of wavelength channels and, based on a respective set of SoSPs associated with the wavelength channels, generate a set of signals and a MIMO equalizer 139 configured to, based on processing of the set of signals based on a MIMO equalization process, recover the set of wavelength channels. It will be appreciated that various example embodiments of the receiver 130 may be further understood by way of reference to FIG. 5 and that various example embodiments of the receiver 131 may be further understood by way of reference to FIG. 6, which illustrate example embodiments for supporting communication of wavelength channels in a WDM IM-DD system. It will be appreciated that the receiver 130 may be configured to provide various other functions for supporting WDM of wavelength channels within the context of the optical communication system 100.

The optical communication system 100, as indicated above, is configured to support WDM for a set of wavelength channels based on SoSP labeling and SoSP detection using combinations of spatial-mode states and polarization states. The SoSP labeling and SoSP detection may be based on the generalized Stokes space, such as by using generalized Stokes vectors (GSVs) at the transmitter 110 and using a generalized Stokes space at the receiver 130. The SoSP labeling and SoSP detection may be further understood by considering such techniques within the context of an SDM system that supports four optical modes (namely, supporting two spatial modes each supporting two polarization modes to provide thereby sixteen SoSPs), which is discussed further below with respect to FIGs. 2-3 for the transmit side and FIGs. 5-6 for the receive side. It will be appreciated that SoSP labeling and SoSP detection may be applied within SDM systems supporting other numbers of optical modes which may be based on fewer or more spatial modes and/or fewer or more polarization modes and, thus, supporting other numbers of SoSPs which may be based on fewer or more optical modes.

It will be appreciated that the optical communication system 100 may be configured in various other ways to support WDM for wavelength channels based on "labeling" of wavelength channels according to SoSP labels such that the corresponding SoSPs are associated with the wavelength channels and, thus, enable multiplexed transport of wavelength channels over optical networks in a colorless manner that does not rely on knowledge of the wavelengths of the wavelength channels.

It will be appreciated that, although primarily presented with respect to example embodiments in which the optical communication system 100 may be a WDM DD system, the optical communication system 100 may more generally represent any optical communication system in communication of wavelength channels may be supported based on "labeling" of the wavelength channels according to SoSP labels such that the corresponding SoSPs are associated with the wavelength channels.

FIG. 2 depicts an example embodiment of a transmitter configured for use in a WDM IM-DD system to support multiplexing of IM signals in a manner for associating SoSPs to the IM signals. It will be appreciated that the transmitter 200 may be used as the transmitter 110 of FIG. 1.

The transmitter 200 includes a set of light sources 211-1 - 211-N (collectively, light sources 211), a set of IM modulators 215-1 - 215-N (collectively, IM modulators 215), and an SoSP labeler 219. The light sources 211-1 - 211-N generate a set of input optical signals 212-1 - 212-N (collectively, input optical signals 212) at the N different wavelengths ($\lambda_1$ - $\lambda_N$, respectively), providing thereby a set of wavelength channels. The light sources 211 may include lasers, light emitting diodes (LEDs), or other suitable types of light sources. The light sources 211-1 - 211-N provide the input optical signals 212 to the IM modulators 215-1 - 215-N, respectively. The IM modulators 215-1 - 215-N receive the input optical signals 212-1 - 212-N from the light sources 211-1 - 211-N, perform intensity modulation of the input optical signals 212-1 - 212-N to provide a set of IM signals 216-1 - 216-N (collectively, IM signals 216) at the N different wavelengths ($\lambda_1$ - $\lambda_N$, respectively), and provide the IM signals 216-1 - 216-N to the SoSP labeler 219. The IM modulators 215 may modulate the intensity of the input optical signals 212 to produce the IM signals 216 based on any suitable type of modulation (e.g., pulse amplitude modulation (PAM) or the like). It is noted that for the IM signals 216, while there is no need to have frequency/phase coherence among different wavelengths and the channel spacing between adjacent wavelengths can be uneven and arbitrary, the optical spectra of the IM signals 216 should not overlap with each other to avoid inter-channel crosstalk. It will be appreciated that, although depicted as being generated by externally modulated light sources, the IM signals 216 alternatively may be generated by directly modulated light sources. The SoSP labeler 219 receives the IM signals 216, assigns SoSP labels to the IM signals 216 so as to associate the SoSPs with the IM signals 216, and outputs an SoSP-labeled signal 225. The SoSP labeler 219 may be a passive photonic device configured to assign SoSP labels to the IM signals 216, so as to associate the SoSPs with the IM signals 216, based on combinations of spatial modes and polarizations which may be realized in various ways. An example embodiment of an SoSP labeler configured for use as the SoSP labeler 219 is presented with respect to FIG. 3. The SoSP-labeled signal 225 output by the SoSP labeler 219 is further propagated for propagation via an optical network (e.g., directed onto an SDM fiber such as the SDM fiber 120 of FIG. 1).

In the transmitter 200, the SoSP labeler 219 assigns SoSP labels based on SoSPs so as to associate the SoSPs with the N IM signals 216. The SoSP labeler 219 labels the N IM signals 216 (at different wavelengths). As noted above, without loss of generality, consider a SDM system that supports two spatial modes (each with two polarization modes), leading to the total mode count D = 4. The optical field of the light propagating through the 2-spatial-mode system can be represented by a high-dimensional Jones vector as

$$|\boldsymbol{\psi}\rangle = [\psi_1 \quad \psi_2 \quad \psi_3 \quad \psi_4],$$

where $\psi_i$ is a complex-valued variable that represents the optical field of a mode. Owing to the isomorphism between Jones and Stokes spaces, each high-dimensional Jones vector corresponds to a GSV ($\vec{\boldsymbol{S}}$) that can be represented by the following 16 real-valued parameters:

$$\vec{\boldsymbol{S}} = [\psi_1\psi_1^*, \psi_2\psi_2^*, \psi_3\psi_3^*, \psi_4\psi_4^*,$$

$$\psi_1\psi_2^* + \psi_1^*\psi_2, j(\psi_1\psi_2^* - \psi_1^*\psi_2),$$

$$\psi_1\psi_3^* + \psi_1^*\psi_3, j(\psi_1\psi_3^* - \psi_1^*\psi_3),$$

$$\psi_1\psi_4^* + \psi_1^*\psi_4, j(\psi_1\psi_4^* - \psi_1^*\psi_4),$$

$$\psi_2\psi_3^* + \psi_2^*\psi_3, j(\psi_2\psi_3^* - \psi_2^*\psi_3),$$

$$\psi_2\psi_4^* + \psi_2^*\psi_4, j(\psi_2\psi_4^* - \psi_2^*\psi_4),$$

$$\psi_3\psi_4^* + \psi_3^*\psi_4, j(\psi_3\psi_4^* - \psi_3^*\psi_4)]$$

It is noted that a linear transformation of the vector above is an equivalent representation of the GSV. The representation includes 4 self-product terms and $C_4^2 = 6$ pairs of cross-product terms (12 in total). In general, for a system with D modes, there will be D self-product terms:

$$\psi_m \psi_m^* \quad (m = 1, 2, \ldots, D)$$

and $C_D^2$ pairs of cross-product terms:

$$\psi_m \psi_n^* + \psi_m^* \psi_n, \; j(\psi_m \psi_n^* - \psi_m^* \psi_n) \quad (m, n \in [1, 2, \ldots, D] \; and \; m \neq n)$$

leading to a total number of $D + 2C_D^2 = D^2$ terms.

A set of Jones vectors may then be designed as the bases of high-dimensional Stokes space. As an example, the following set of high-dimensional Jones vectors may be chosen to represent 16 SoSPs:

$$
\begin{bmatrix}
|\psi_1\rangle \\
|\psi_2\rangle \\
|\psi_3\rangle \\
|\psi_4\rangle \\
|\psi_5\rangle \\
|\psi_6\rangle \\
|\psi_7\rangle \\
|\psi_8\rangle \\
|\psi_9\rangle \\
|\psi_{10}\rangle \\
|\psi_{11}\rangle \\
|\psi_{12}\rangle \\
|\psi_{13}\rangle \\
|\psi_{14}\rangle \\
|\psi_{15}\rangle \\
|\psi_{16}\rangle
\end{bmatrix}
=
\begin{bmatrix}
1 & 0 & 0 & 0 \\
0 & 1 & 0 & 0 \\
0 & 0 & 1 & 0 \\
0 & 0 & 0 & 1 \\
1/\sqrt{2} & 1/\sqrt{2} & 0 & 0 \\
1/\sqrt{2} & j/\sqrt{2} & 0 & 0 \\
1/\sqrt{2} & 0 & 1/\sqrt{2} & 0 \\
1/\sqrt{2} & 0 & j/\sqrt{2} & 0 \\
1/\sqrt{2} & 0 & 0 & 1/\sqrt{2} \\
1/\sqrt{2} & 0 & 0 & j/\sqrt{2} \\
0 & 1/\sqrt{2} & 1/\sqrt{2} & 0 \\
0 & 1/\sqrt{2} & j/\sqrt{2} & 0 \\
0 & 1/\sqrt{2} & 0 & 1/\sqrt{2} \\
0 & 1/\sqrt{2} & 0 & j/\sqrt{2} \\
0 & 0 & 1/\sqrt{2} & 1/\sqrt{2} \\
0 & 0 & 1/\sqrt{2} & j/\sqrt{2}
\end{bmatrix}
\tag{1}
$$

The 16 IM signals 216 may then be labeled with the above SoSPs based on association of the SoSPs with the 16 IM signals 216. Namely, each of the 16 IM signals 116 (at 16 different wavelengths) are represented as:

$$IM_i = A_i e^{j\omega_i t} |\psi_i\rangle$$

where $A_i$ is the optical amplitude of the $i$-th signal and $|A_i|^2$ is its optical intensity, and $\omega_i$ is the angular frequency of the i-th wavelength. A 2-spatial-mode (4 modes in total, because each spatial mode contains 2 polarization modes) system can at most label $4^2 = 16$ IM signals. More generally, for a system with $D$ modes (polarization modes have been counted in $D$), the maximum number of IM signals to be labeled is $D^2$.

Here, it may be assumed that the system uses the maximum degree of freedom ($D^2$) to label IM signals. The framework is also applicable to a signal count less than 16, using the same receiver structure.

According to the definition of GSV:

$$\vec{S} = \begin{bmatrix} 1 & 0 & 0 & 0 & \frac{1}{2} & \frac{1}{2} & \frac{1}{2} & \frac{1}{2} & \frac{1}{2} & \frac{1}{2} & 0 & 0 & 0 & 0 & 0 & 0 \\ 0 & 1 & 0 & 0 & \frac{1}{2} & \frac{1}{2} & 0 & 0 & 0 & 0 & \frac{1}{2} & \frac{1}{2} & \frac{1}{2} & \frac{1}{2} & 0 & 0 \\ 0 & 0 & 1 & 0 & 0 & 0 & \frac{1}{2} & \frac{1}{2} & 0 & 0 & \frac{1}{2} & \frac{1}{2} & 0 & 0 & \frac{1}{2} & \frac{1}{2} \\ 0 & 0 & 0 & 1 & 0 & 0 & 0 & 0 & \frac{1}{2} & \frac{1}{2} & 0 & 0 & \frac{1}{2} & \frac{1}{2} & \frac{1}{2} & \frac{1}{2} \\ 0 & 0 & 0 & 0 & 1 & 0 & 0 & 0 & 0 & 0 & 0 & 0 & 0 & 0 & 0 & 0 \\ 0 & 0 & 0 & 0 & 0 & 1 & 0 & 0 & 0 & 0 & 0 & 0 & 0 & 0 & 0 & 0 \\ 0 & 0 & 0 & 0 & 0 & 0 & 1 & 0 & 0 & 0 & 0 & 0 & 0 & 0 & 0 & 0 \\ 0 & 0 & 0 & 0 & 0 & 0 & 0 & 1 & 0 & 0 & 0 & 0 & 0 & 0 & 0 & 0 \\ 0 & 0 & 0 & 0 & 0 & 0 & 0 & 0 & 1 & 0 & 0 & 0 & 0 & 0 & 0 & 0 \\ 0 & 0 & 0 & 0 & 0 & 0 & 0 & 0 & 0 & 1 & 0 & 0 & 0 & 0 & 0 & 0 \\ 0 & 0 & 0 & 0 & 0 & 0 & 0 & 0 & 0 & 0 & 1 & 0 & 0 & 0 & 0 & 0 \\ 0 & 0 & 0 & 0 & 0 & 0 & 0 & 0 & 0 & 0 & 0 & 1 & 0 & 0 & 0 & 0 \\ 0 & 0 & 0 & 0 & 0 & 0 & 0 & 0 & 0 & 0 & 0 & 0 & 1 & 0 & 0 & 0 \\ 0 & 0 & 0 & 0 & 0 & 0 & 0 & 0 & 0 & 0 & 0 & 0 & 0 & 1 & 0 & 0 \\ 0 & 0 & 0 & 0 & 0 & 0 & 0 & 0 & 0 & 0 & 0 & 0 & 0 & 0 & 1 & 0 \\ 0 & 0 & 0 & 0 & 0 & 0 & 0 & 0 & 0 & 0 & 0 & 0 & 0 & 0 & 0 & 1 \end{bmatrix} \begin{bmatrix} |A_1|^2 \\ |A_2|^2 \\ |A_3|^2 \\ |A_4|^2 \\ |A_5|^2 \\ |A_6|^2 \\ |A_7|^2 \\ |A_8|^2 \\ |A_9|^2 \\ |A_{10}|^2 \\ |A_{11}|^2 \\ |A_{12}|^2 \\ |A_{13}|^2 \\ |A_{14}|^2 \\ |A_{15}|^2 \\ |A_{16}|^2 \end{bmatrix} \qquad (2)$$

It is noted that the above $\vec{S}$ only contains self-beating (within each wavelength channel) components $|A_i|^2$, because cross-beating (between adjacent WDM channels) components $A_i A_j^*$ are mostly rejected by the LPFs which may be present in the receiver. The transfer matrix in (2) may be denoted as $\mathbb{T}$ and the IM signal vector may be denoted as $\vec{A} = [|A_1|^2, |A_2|^2, \dots, |A_{16}|^2]$, in which case Eq. (2) may be represented more simply as:

$$\vec{S}_{TX} = \mathbb{T}_{TX} \cdot \vec{A} \qquad (2)$$

It is noted that the main target of choosing the set of SoSPs in (1) is to make $\mathbb{T}$ in (2) well-conditioned to be invertible. That is to say, it would be possible to use a different set of SoSPs to label the wavelength channels, as long as the corresponding conversion matrix in (2) is invertible.

It will be appreciated that, although primarily presented with respect to use of a specific implementation of intensity modulation at the transmitter 200 to produce the IM signals, in at least some example embodiments other techniques may be applied to produce the IM signals supporting the wavelength channels.

It will be appreciated that, although primarily presented with respect to example embodiments utilizing specific types, numbers, and arrangements of elements of the transmitter 200, in at least some example embodiments the transmitter 200 may include other types, numbers, and/or arrangements of elements for supporting multiplexing of optical channels based on SoSPs.

FIG. 3 depicts an example embodiment of an SoSP labeler configured to support association of SoSPs with IM signals at a transmitter of a WDM IM-DD system. It will be appreciated that the SoSP labeler 300 may be used as the SoSP labeler 219 of FIG. 2 or the SoSP labeler 111 of FIG. 1.

The SoSP labeler 300, for each IM signal, assigns an SoSP (a row vector in (1)) to the IM signal, respectively. The SoSP labeler 300 is a schematic SoSP labeler for a $D = 4$ system based on combinations of 2 spatial modes (denoted as Mode 1 and Mode 2) and 2 polarizations (denoted as Polarization X and Polarization Y). The SoSP labeler 300, for the D = 4 system (2 spatial modes $\times$ 2 polarizations), is configured to use 16 SoSP labels 310 (corresponding to the row vectors in (1)) to support 16 IM signals 320 (represented by IM Tx 1 through IM Tx 16), respectively. The SoSP labeler 300 assigns the 16 SoSP labels 310 to the 16 IM signals 320 in a manner for associating the SoSPs with the 16 IM signals 320. The SoSP labeler 300 defines four "ports" 330 corresponding to the 4 columns in (1) that represent 4 optical modes in the high-dimensional Jones space. These "ports" 330 are denoted as port 330-1 (corresponding to Mode 1 - Polarization X), port 330-2 (corresponding to Mode 1 - Polarization Y), port 330-3 (corresponding to Mode 2 - Polarization X), and port 330-4 (corresponding to Mode 2 - Polarization Y). The SoSP labeler 300 is configured such that, for the 4 self-product terms (indicated by a lack of $1/\sqrt{2}$ preceding the line, corresponding to IM Tx 1, IM Tx 4, IM Tx 13, and IM Tx 16), the SoSP labeler 300 directly guides the IM signals to the corresponding ports 330, respectively, whereas, for the 12 cross-product terms (indicated by $1/\sqrt{2}$ preceding the line corresponding to IM Tx 2, IM Tx 3, IM Tx 5, IM Tx 6, IM Tx 7, IM Tx 8, IM Tx 9, IM Tx 10, IM Tx 11, IM Tx 12, IM Tx 14, and IM Tx 15), the SoSP labeler 300 first splits the IM signals and then send them to the corresponding pair of ports 330 with certain optical phase offset (e.g., 0 or 90 degrees).

The SoSP labeler 300, as indicated above, is configured such that, for the 4 self-product terms, the SoSP labeler 300 directly guides the IM signals to the corresponding ports 330, respectively, whereas, for the 12 cross-product terms, the SoSP labeler 300 first splits the IM signals and then send them to the corresponding pair of ports 330 with certain optical phase offset. For example, for the IM signal (IM Tx 1), corresponding to a self-product term, with an SoSP label of [1 0 0 0], the signal is coupled directly to port 330-1 associated with the X polarization of Mode 1. For example, for the IM signal (IM Tx 2), corresponding to a cross-product term, with an SoSP label of $1/\sqrt{2}\begin{bmatrix}1 & 1 & 0 & 0\end{bmatrix}$, the signal is split to two parts with the first part being sent to the X polarization of Mode 1 and the second part being sent to the Y polarization of Mode 1. For example, for the IM signal (IM Tx 8), corresponding to a cross-product term, with an SoSP label of $1/\sqrt{2}\begin{bmatrix}1 & 0 & 0 & j\end{bmatrix}$, the signal is split to two parts with the first part being sent to the X polarization of Mode 1 and the second part being sent to the Y polarization of Mode 2 after a 90-degree phase shift (with respect to the optical path of the first part). For example, for the IM signal (IM Tx 16), corresponding to a self-product term, with an SoSP label of [0 0 0 1], the signal is coupled directly to port 330-4 associated with the Y polarization of Mode 2. It will be appreciated that explicit descriptions of the handling of the remaining IM signals 320 is omitted for purposes of brevity.

The SoSP labeler 300 is configured such that the outputs of the ports 330 are then coupled to spatial mode and polarization combiners configured to produce, based on combining of labeled IM signals 320 which have been labeled with the SoSP labels 310, the SoSP-labeled signal 360 that is output by the SoSP labeler 300. The outputs of the ports 330 are then coupled to a pair of polarization combiners 340-1 - 340-2 (collectively, polarization combiners 340), and the outputs of the polarization combiners 340 are then coupled to a spatial mode combiner 350 which combines the spatial mode signals from the polarization combiners 340 to provide the SoSP-labeled signal 360. More specifically, Polarization X and Polarization Y signals of Mode 1 are combined by the polarization combiner 340-1 to provide a spatial mode signal for Mode 1 (including Polarization X and Polarization Y for Mode 1) and Polarization X and Polarization Y signals of Mode 2 are combined by the polarization combiner 340-2 to provide a spatial mode signal for Mode 2 (including Polarization X and Polarization Y for Mode 2), and the outputs of the polarization combiners 340 are then combined by the spatial mode combiner 350 to provide the SoSP-labeled signal 360. In this manner, the SoSP labeler 300 is configured to combine the labeled IM signals 320, which have been labeled with the SoSP labels 310, to form the SoSP-labeled signal 360 that is output by the SoSP labeler 300.

The SoSP labeler 300, it will be appreciated, may be viewed as a conceptual schematic, illustrating the manner in which the optical signals are split, phase shifted, and redistributed into the optical field of different modes (both spatial modes and polarization modes), without necessarily explicitly indicating specific realizations of such conceptual schematic. For example, although primarily presented in FIG. 3 with respect to an example embodiment in which polarization combining is performed before spatial mode combining, in at least some example embodiments spatial mode combining may be performed before polarization combining. For example, there are many different realizations of such conceptual schematic, such as where the SoSP labeler 300 may be implemented based on one or more of the following: (1) using fiber-based / free-space power splitters, phase shifters, polarization beam combiners, and spatial mode combiners, (2) using a photonic integrated circuit (PIC) that includes power splitters, phase shifters, polarization beam combiners, and spatial mode combiners, or (3) using multiple phase plates to redistribute the optical power of IM signals (with the desired phase shift) to a target mode profile (e.g., the mode profile of a 2-core fiber with certain core spacing), namely, the multi-plane light conversion (MPLC) technique. It will be appreciated that various other implementations of the SoSP labeler 300 may be realized. It will be appreciated that such realizations will be effective as long as the power redistributions and phase shifts defined in (1) are realized.

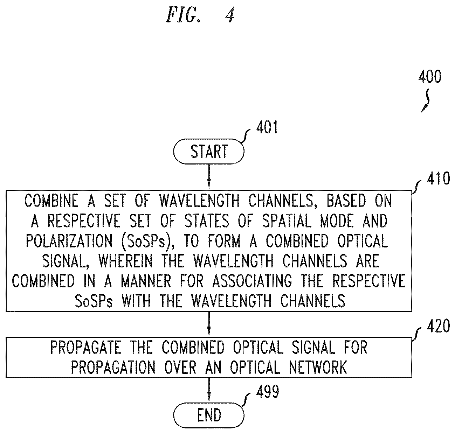

FIG. 4 depicts an example embodiment of a method for use at a transmitter to support combining of wavelength channels based on SoSPs. It will be appreciated that, although primarily presented herein as being performed serially, at least a portion of the functions of method 400 may be performed contemporaneously or in a different order than as presented in FIG. 4. At block 401, the method 400 begins. At block 410, combine a set of wavelength channels, based on a respective set of states of spatial mode and polarization (SoSPs), to form a combined optical signal, wherein the wavelength channels are combined in a manner for associating the respective SoSPs with the wavelength channels. At block 420, propagate the combined optical signal for propagation over an optical network. At block 499, the method 400 ends.

FIG. 5 depicts an example embodiment of a receiver configured for use in a WDM IM-DD system to support demultiplexing of IM signals based on SoSPs associated with the IM signals. It will be appreciated that the receiver 500 may be used as the receiver 130 of FIG. 1.

The receiver 500 receives an SoSP-labeled signal 525 via an optical network (e.g., via an SDM fiber such as the SDM fiber 120 of FIG. 1). The SoSP-labeled signal 525 is transporting a set of N IM signals (e.g., the N IM signals 116 of FIG. 1). The receiver 500 includes a generalized Stokes receiver (GSR) 531, a set of low pass filters (LPFs) 535-1 - 535-$N_{RX}$ (collectively, LPFs 535), a set of analog-to-digital converters (ADCs) 537-1 - 537-$N_{RX}$ (collectively, ADCs 537), and a digital MIMO equalizer 539. It is noted that, here, $N_{RX}$ may be equal to N, but does not need to be equal to N and its value may vary among different GSR structures. The SoSP-labeled signal 525 is detected by the GSR 531, which recovers the SoSP-labeled signal 525 in the generalized Stokes space. The GSR 531 includes $N_{RX}$ photodetectors (PDs), omitted for purposes of clarity, configured to detect the optical power of a set of orthogonal SoSPs and convert them into a set of photocurrents 532-1 - 532-$N_{RX}$ (collectively, photocurrents 532). An example embodiment of the GSR 531 is presented in FIG. 6. The LPFs 535-1 - 535-$N_{RX}$ are configured to introduce an LPF effect before the photocurrents 532-1 - 532-$N_{RX}$ are received by the ADCs 537-1 - 537-$N_{RX}$, respectively. It will be appreciated that, although primarily presented with respect to introduction of the LPF effect based on the set of analog LPFs 535 between the PDs of the GSR 531 and the ADCs 537, the LPF effect may be introduced in other ways (e.g., by the intrinsic bandwidth limit of the PDs of the GSR 531, by the intrinsic bandwidth limit of the ADCs 537, by digital LPFs disposed between the ADCs 537 and the digital MIMO equalizer 539, or the like). The LPF bandwidth shall be wider than the per-channel signal bandwidth and narrower than the minimum channel spacing of adjacent wavelength channels. This is to minimize the inter-channel crosstalk, because any inter-channel cross-beating in the PDs is filtered out. The ADCs 537-1 - 537-$N_{RX}$ are configured to sample and digitize the photocurrents 532-1 - 532-$N_{RX}$ to provide a set of digital signals 538-1 - 538-$N_{RX}$ (collectively, digital signals 538) for the following digital signal processing (DSP). The digital MIMO equalizer 539, which also operates in the generalized Stokes space, receives the digital signals 538-1 - 538-$N_{RX}$ and, based on the digital signals 538-1 - 538-$N_{RX}$, recovers the N IM signals.

In the receiver 500, the GSR 531 detects SoSPs in the generalized Stokes space. As indicated above, a GSR may use $N_{RX}$ PDs, whose outputs form a vector ( $\vec{R}$ ) with a dimension of $N_{RX} \times 1$. This vector should be a linear transformation of the received GSV ( $\vec{S}_{RX}$ ), denoted as

$$\vec{R} = \mathbb{T}_{RX} \cdot \vec{S}_{RX} \qquad (3)$$

where $\mathbb{T}_{RX}$ is a $N_{RX} \times 16$ matrix that characterizes the transformation between the received photocurrents and the received GSV. During transmissions, the SDM fiber may introduce random spatial mode coupling and polarization rotation (i.e., variations of SoSP). This can be characterized by a generalized Mueller matrix $\mathbb{M}$ :

$$\vec{S}_{RX} = \mathbb{M}_{16 \times 16} \cdot \vec{S}_{TX} \qquad (4)$$

Combining (2), (3) and (4) results in:

$$\vec{R} = \mathbb{T}_{RX} \cdot \vec{S}_{RX} = \mathbb{T}_{RX} \mathbb{M}_{16 \times 16} \vec{S}_{TX} = \mathbb{T}_{RX} \mathbb{M}_{16 \times 16} \mathbb{T}_{TX} \vec{A} = \mathbb{F} \cdot \vec{A}$$

where $\mathbb{F} = \mathbb{T}_{RX} \mathbb{M}_{16 \times 16} \mathbb{T}_{TX}$, with a dimension of $N_{RX} \times 16$. As a result, the IM signals can be recovered by a $N_{RX} \times 16$ MIMO equalization. In the case that the transmitter does not use the full degree of freedom of Stokes space, namely, $N_{TX} < 16$, the MIMO dimension would be $N_{RX} \times N_{TX}$. This MIMO can be a one-step process, or a multi-step process that acquires $\mathbb{T}_{RX}$, $\mathbb{M}_{16 \times 16}$, and $\mathbb{T}_{TX}$ individually. It is compatible with traditional MIMO techniques, like (but not limited to) zero-forcing, least mean square (LMS), or recursive least square (RLS) adaptive algorithms, training-added or decision-directed algorithms, successive interference cancellation algorithms, and so forth.

It will be appreciated that, although primarily presented with respect to use of digital MIMO equalization at the receiver 500 to recover the IM signals, in at least some example embodiments analog MIMO equalization may be used to recover the IM signals (e.g., the outputs of the GSR 531 may be processed directly by an analog MIMO equalizer, thereby obviating the need for use of the ADCs 537 and possibly other elements).

It will be appreciated that, although primarily presented with respect to example embodiments utilizing specific types, numbers, and arrangements of elements of the receiver 500, in at least some example embodiments the receiver 500 may include other types, numbers, and/or arrangements of elements for supporting demultiplexing of optical channels based on SoSPs.

FIG. 6 depicts an example embodiment of a GSR configured to support detection of SoSPs of wavelength channels at a receiver of a WDM IM-DD system. It will be appreciated that the GSR 600 may be used as the GSR 531 of FIG. 5 or the receiver 131 of FIG. 1.

The GSR 600, similar to the SoSP labeler, is a detection concept applicable to any receiver structure that can detect the GSV (or its linear transformation) as defined above. In general, a GSV splits the spatial and polarization modes, introduces certain phase shifts (e.g., 0 and 90 degree), and then detects the power of a mode or a mixture (cross-beating) of two modes. The GSR 600 is configured with 90-degree optical hybrids for a $D = 4$ system. The GSR 600 first splits both the spatial modes and the polarization modes. The powers of each of the 4 modes are directly detected by photodetectors (PDs) as the 4 self-product terms in the GSV. For each pair of the cross-product terms in the GSV, the 2 modes (that are involved in the cross-product) are mixed in a 90-degree optical hybrid, whose outputs are detected by a pair of balanced PDs (BPDs). The BPD outputs are pairs of cross-product terms in the GSV. This results in a set of outputs which may be used to recover the IM signals through MIMO equalization (e.g., analog MIMO equalization or digital MIMO equalization). In this manner, the SoSPs which were used to label the IM signals at the transmit side may be used to recognize, demultiplex, and recover the IM signals at the receive side, thereby enabling colorless WDM of wavelength channels in IM-DD systems.

The GSR 600 is configured to receive an SoSP-labeled signal 610 and produce a set of output signals 670 which may be used to recover a set of IM signals from the SoSP-labeled signal 610. The GSR 600 includes a spatial mode splitter 620 that receives the SoSP-labeled signal 610, splits the SoSP-labeled signal 610 into two spatial mode signals (denoted as Mode 1 and Mode 2), and provides the two spatial mode signals to a pair of polarization splitters 630-1 and 630-2 (collectively, polarization splitters 630), respectively. The polarization splitters 630 each split the spatial mode signals into X polarization and Y polarization components (illustratively, the polarization splitter 630-1 associated with Mode 1 splits the X and Y polarizations of the spatial mode signal for the first spatial mode and the polarization splitter 630-2 associated with Mode 2 splits the X and Y polarizations of the spatial mode signal for the second spatial mode). This results in four optical modes as represented by four "ports" 640-1 - 640-4 (collectively, ports 640). The GSR 600 includes a set of 90-degree optical hybrids 650-1 - 650-6 (collectively, 90-degree optical hybrids 650) and a set of detectors 660 (including 4 PDs and 12 BPDs). The powers of each of the 4 modes are directly detected by four PDs as the 4 self-product terms in the GSV, thereby producing 4 output signals. For each of the 6 pairs of the cross-product terms in the GSV, the 2 modes (that are involved in the cross-product) are mixed in one of the 90-degree optical hybrids 650 and the outputs are detected by a pair of BPDs associated with the one of the 90-degree optical hybrids 650, respectively, thereby producing 12 output signals. This results in a set of 16 output signals, denoted as output signals 670, which may be used to recover the IM signals through MIMO equalization (e.g., analog MIMO equalization or digital MIMO equalization).

The GSR 600, it will be appreciated, may be viewed as a conceptual schematic, illustrating the manner in which the SoSPs are recovered by direct detection, without necessarily explicitly indicating specific realizations of such conceptual schematic. For example, although primarily presented in FIG. 6 with respect to an example embodiment in which spatial mode splitting is performed before polarization splitting, in at least some example embodiments polarization splitting may be performed before spatial mode splitting. For example, the 90-degree optical hybrid may be changed to other optical components/subsystems that mix the inputs with certain phase shift (e.g., an optical coupler). For example, the BPD in 660 may be replaced by a PD. For example, the discrete detectors 660 may be an integrated detector array or a camera. For example, there are many different realizations of such conceptual schematic, such as where the GSR 600 may be implemented based on one or more of the following: (1) using fiber-based / free-space power splitters, phase shifters, polarization beam combiners, and spatial mode combiners, (2) using a photonic integrated circuit (PIC) that includes power splitters, phase shifters, polarization beam combiners, and spatial mode combiners, or (3) using multiple phase plates to redistribute the optical power of the received spatial and polarization modes (with the desired phase shift) to a target set of spatially-separated outputs, namely, the multi-plane light conversion (MPLC) technique.

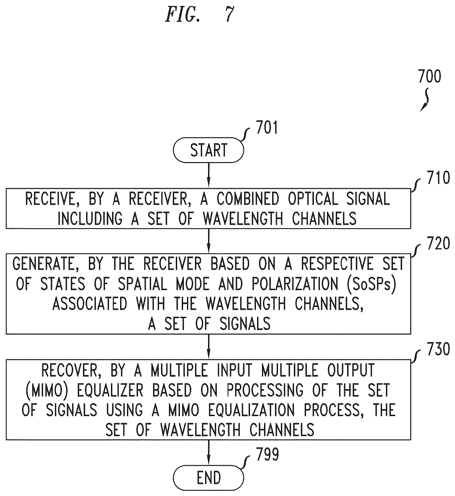

FIG. 7 depicts an example embodiment of a method for use at a receiver to support recovery of wavelength channels based on SoSPs. It will be appreciated that, although primarily presented herein as being performed serially, at least a portion of the functions of method 700 may be performed contemporaneously or in a different order than as presented in FIG. 7. At block 701, the method 700 begins. At block 710, receive, by a receiver, a combined optical signal including a set of wavelength channels. At block 720, generate, by the receiver based on a respective set of states of spatial mode and polarization (SoSPs) associated with the wavelength channels, a set of signals. At block 730, recover, by a multiple input multiple output (MIMO) equalizer based on processing of the set of signals using a MIMO equalization process, the set of wavelength channels. At block 799, the method 700 ends.

It will be appreciated that, although primarily presented herein within the context of supporting communication of wavelength channels based on SoSPs for particular types of signals in a particular type of system (namely, for IM signals in a WDM IM-DD system), various example embodiments presented herein may be applied for or adapted for use in supporting communication of wavelength channels based on SoSPs for other types of signals in other types of systems. For example, in at least some example embodiments, SoSP labeling may be applied for communication of other non-IM formats that can be compatible with direct detection. For example, in at least some example embodiments, SoSP labeling may be applied for WDM of SSB signals (e.g., based on use of SSB modulation, which places a continuous-wave optical carrier at the edge of an I/Q-modulated signal spectrum, and DD which may be used to recover the I/Q signal by the help of the carrier. It will be appreciated that various example embodiments presented herein may be applied for or adapted for use in supporting communication of wavelength channels based on SoSPs for other types of signals using modulation which may be recovered by direct detection, for signals in other types of systems supporting direct detection for recovery of signals, or the like, as well as various combinations thereof.

Various example embodiments of the WDM DD system based on SoSP labeling may be configured to provide various advantages or potential advantages.

For example, various example embodiments of the WDM DD system based on SoSP labeling may be configured to support a colorless WDM DD system for various types of direct detection which may be used within WDM systems, such as for WDM IM-DD systems, WDM SSB-DD systems, or the like. For example, various example embodiments of the WDM DD system based on SoSP labeling may be configured to support a colorless WDM DD system for various other types of DD-based WDM systems or for various other types of DD-based optical communication systems.

For example, various example embodiments of the WDM DD system based on SoSP labeling may be configured to obviate the need for use of colored WDM technology. Typically, a WDM system relies on a pair of a wavelength multiplexer and wavelength demultiplexer to combine and separate the multiple WDM channels, respectively. While the multiplexer may be wavelength-nonselective (e.g., using an optical power combiner), the demultiplexer typically must be wavelength-selective (e.g., an arrayed waveguide grating, or an optical power splitter followed by optical filters with different passbands) to filter out each channel, because any remaining optical power at other wavelength channels will be the inter-channel interference for the channel of interest in a DD receiver. Various example embodiments of the WDM DD system based on SoSP labeling avoid such constraints and difficulties by obviating the need for use of wavelength multiplexers and demultiplexers in the WDM DD system.

For example, various example embodiments of the WDM DD system based on SoSP labeling may be configured to obviate the need for use of wavelength multiplexers and demultiplexers which may face various bottlenecks when being applied to short-reach optical applications targeting small form factor and low power consumption. A typical example is the datacenter intra-connection/inter-connection, whose application environment is typically quite different from traditional optical networks. These applications typically require dense integration of multiple optical components on a single photonic chip. The colored multiplexer/demultiplexer needs precise temperature control to stabilize its wavelength range, which is a big issue for future densely deployed WDM transmitters at chip scale. The need to cool the transponder will bring about huge energy consumption, as well as significant technical challenges for power dissipation. It is not trivial to integrate a multi-channel multiplexer/demultiplexer on a photonic integrated circuit (PIC) with a high extinction ratio per channel. A colored transmitter means a transmitter working on a particular series of wavelengths is different from another transmitter working in a different wavelength range. This is not conducive to the high-volume production of chip-scale WDM transmitters considering it needs multiple designs. A reconfigurable design of multiplexers/demultiplexers may avoid multiple designs of WDM transceivers, but the on-chip reconfigurability of both operating wavelengths (and bandwidth of passbands) adds substantial complexity to both the chip design and the control mechanism. Various example embodiments of the WDM DD system based on SoSP labeling avoid such constraints and difficulties by obviating the need for use of wavelength multiplexers and demultiplexers in the WDM DD system.

For example, various example embodiments of the WDM DD system based on SoSP labeling may be configured to extend the capability for polarization division multiplexing (PDM) and space division multiplexing (SDM) techniques to support highly parallel IM-DD transmissions. For example, various example embodiments of the WDM IM-DD system based on SoSP labeling may be configured to extend applications of PDM and its related SoP labeling techniques, which are often applied in order to avoid colored wavelength multiplexers and demultiplexers. While PDM and its related SoP labeling techniques can avoid the need for colored wavelength multiplexers/demultiplexers, the degree of freedom for SoPs is limited to at most four (i.e., they are not scalable to higher IM-DD channel counts). Additionally, when applying SDM to IM-DD based systems, there are also some problems such as: (1) MMF, or certain types of MCF that introduce mode coupling during fiber transmission is not an option for SDM IM-DD system, because a DD receiver cannot decouple the modes (usually, MMF has a much smaller form factor than SMF fiber bundles and is easier for manufacturing than MCF) and (2) the number of IM-DD channels in an SDM system only scales linearly with the number of spatial modes supported by the SDM fibers. It becomes difficult (or space-inefficient) to support tens of IM-DD channels, considering the SMF bundle or the MCF should have tens of cores to support tens of spatial modes.

For example, various example embodiments of the colorless WDM IM-DD system based on SoSP labeling may be configured to mitigate power consumption of WDM IM-DD systems by obviating the need for power-hungry wavelength management. For example, with the explosive development of large-scale AI/ML models, the capacity demand of datacenters (DCs) is increasing rapidly (e.g., the capacity demand of DCs may soon reach multi-Tb/s per switch port). It is expected that, in order to meet such huge demand, massive integration of WDM IM-DD transceivers will be inevitable, which will bring significant challenges on power consumption and dissipation. Currently, it is estimated that DCs account for over four percent of U.S. electricity consumption, and nearly half of that energy is estimated to be spent on cooling. As indicated above, various example embodiments of the WDM DD system based on SoSP labeling may be configured to mitigate aspects of this significant expected power consumption of WDM DD systems by obviating the need for power-hungry wavelength management.

It will be appreciated that various example embodiments of the WDM DD system based on SoSP labeling may be configured to provide various other advantages or potential advantages.

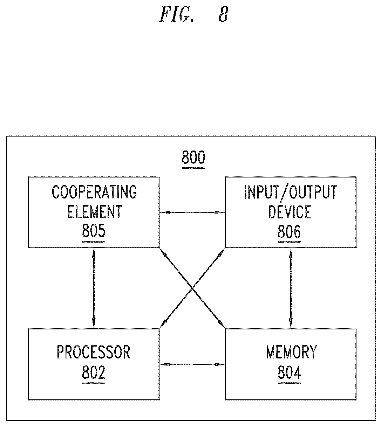

FIG. 8 depicts an example embodiment of a computer suitable for use in performing various functions presented herein.

The computer 800 includes a processor 802 (e.g., a central processing unit (CPU), a graphics processing unit (GPU), a network processing unit (NPU), a processor, a processor core of a processor, a subset of processor cores of a processor, a set of processor cores of a processor, or the like) and a memory 804 (e.g., a random access memory (RAM), a read-only memory (ROM), or the like). In at least some example embodiments, the computer 800 may include at least one processor and at least one memory storing instructions that, when executed by the at least one processor, cause the computer 800 to perform various functions presented herein.

The computer 800 also may include a cooperating element 805. The cooperating element 805 may be a hardware device. The cooperating element 805 may include firmware. The cooperating element 805 may be a process that can be loaded into the memory 804 and executed by the processor 802 to implement various functions presented herein (in which case, for example, the cooperating element 805 (including associated data structures) can be stored on a non-transitory computer-readable medium, such as a storage device or other suitable type of storage element (e.g., a magnetic drive, an optical drive, or the like)).

The computer 800 also may include one or more input/output devices 806. The input/output devices 806 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 800 may represent a general architecture and functionality suitable for implementing functional elements described herein, portions of functional elements described herein, or the like, as well as various combinations thereof. For example, the computer 800 may be used to implement one or more controllers configured to control various elements of a transmitter configured to support colorless WDM of wavelength channels based on SoSP labeling in WDM DD systems, one or more controllers configured to control various elements of a receiver configured to support colorless WDM of wavelength channels based on SoSP labeling in WDM DD systems, or the like, as well as various combinations thereof.

It will be appreciated that various functions presented herein may be implemented within hardware, a combination of hardware and software, or the like. For example, at least some of the functions presented herein may be implemented in hardware (e.g., using a general purpose computer, one or more application specific integrated circuits, and/or any other hardware equivalents). For example, at least some of the functions presented herein may be implemented in a combination of hardware and software (e.g., via implementation of software on one or more processors, for executing on a general purpose computer (e.g., via execution by one or more processors) so as to provide a special purpose computer, and the like).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored within non-transitory computer-readable media, such as within memory within a computing device operating according to the instructions, within fixed or removable media, or the like. It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other network device or computing device.

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various example embodiments which incorporate the teachings presented herein have been shown and described in detail herein, those skilled in the art can readily devise many other varied example embodiments that still incorporate the teachings presented herein.

**Claims**

1. An apparatus, comprising:
   a labeler configured to combine a set of wavelength channels, in a manner for associating a respective set of states of spatial mode and polarization (SoSPs) with respective wavelength channels from the set of wavelength channels, to form a combined optical signal for propagation over an optical network.

2. The apparatus of claim 1, wherein the set of wavelength channels includes a set of DD wavelength channels that use modulation capable of being recovered by direct detection (DD).

3. The apparatus of claim 1, wherein the set of wavelength channels is modulated to form a set of intensity-modulated (IM) signals or a set of single-sideband signals.

4. The apparatus of claim 1, wherein the SoSPs are associated with the respective wavelength channels based on a respective set of SoSP labels defining a respective set of optical modes, wherein the set of optical modes is defined based on a set of combinations of a set of spatial modes and a set of polarizations.

5. The apparatus of claim 1, wherein the SoSPs are based on a high-dimensional Jones vector or a generalized Stokes vector.

6. The apparatus of claim 1, wherein the labeler includes a set of D ports corresponding to a set of D combinations of a set of S spatial modes and a set of P polarizations, wherein S x P = D, wherein the labeler includes a set of S polarization combiners each configured to combine respective sets of signals of each of the P polarizations.

7. The apparatus of claim 6, wherein the D combinations of the set of S spatial modes and the set of P polarizations correspond to D respective optical modes in a high-dimensional Jones space.

8. The apparatus of claim 6, wherein the set of wavelength channels includes C wavelength channels, wherein:

   a first subset of the set of wavelength channels, including D wavelength channels from the C wavelength channels which are associated with D self-product terms of the SoSPs, are provided directly to respective ones of the D ports; and
   a second subset of the set of wavelength channels, including C - D wavelength channels from the C wavelength channels which are associated with C - D cross-product terms of the SoSPs, are each split to provide a respective pair of split signals and the respective pair of split signals is provided to a respective pair of ports of the D ports.

9. The apparatus of claim 8, wherein, for at least one of the C - D wavelength channels, the respective pair of split signals is provided to a respective pair of ports of the D ports with a phase offset therebetween.

10. The apparatus of claim 6, wherein the labeler includes a spatial mode combiner from the set of S polarization combiners configured to combine a respective set of S outputs to provide the combined optical signal for propagation over the optical network.

11. The apparatus of claim 1, wherein the labeler is configured to combine the set of wavelength channels to form the combined optical signal based on at least one of:

a fiber-based or free-space implementation including at least one power splitter, at least one phase shifter, at least one polarization beam combiner, and at least one spatial mode combiner;

a photonic integrated circuit implementation including at least one power splitter, at least one phase shifter, at least one polarization beam combiner, and at least one spatial mode combiner; or

a set of multiple phase plates configured to redistribute optical power of the wavelength channels to a target mode profile.

12. The apparatus of claim 1, further comprising:

a receiver configured to receive the combined optical signal and generate a set of signals based on the respective set of states of spatial mode and polarization (SoSPs) associated with the respective wavelength channels from the set of wavelength channels; and

a multiple input multiple output (MIMO) equalizer configured to recover the set of wavelength channels based on processing of the set of signals according to a MIMO equalization process.

13. The apparatus of claim 12, wherein the receiver is configured to detect respective optical powers of the SoSPs to generate the set of signals.

14. The apparatus of claim 12, wherein the receiver includes a generalized Stokes receiver configured to detect the SoSPs in a generalized Stokes space based on direct detection (DD).

15. The apparatus of claim 12, wherein the receiver comprises:

a set of splitters, including at least one spatial mode splitter configured to split a set of spatial modes of the SoSPs and at least one polarization splitter configured to split a set of polarizations of the SoSPs, configured to produce the set of signal including a first set of signals associated with the set of self-product terms of the SoSPs and a second set of signals associated with a set of cross-product terms of the SoSPs;

a set of optical hybrids configured to mix pairs of signals from the second set of signals associated with the set of cross-product terms of the SoSPs to produce a respective set of mixed pairs of cross-product terms of the SoSPs; and

a set of detectors, including a first set of detectors configured to directly detect the first set of signal associated with a set of self-product terms of the SoSPs from the set of splitters and a second set of detectors configured to detect the respective mixed pairs of cross-product terms of the SoSPs from the optical hybrids.

*FIG. 1*

OPTICAL  COMMUNICATION
SYSTEM
100

```
┌─────────────────────┐   SoSP-LABELED   ┌──────────────────────────────────────┐
│   TRANSMITTER       │     SIGNAL        │           RECEIVER                   │
│      110            │      125          │              130                     │
│                     │                   │                                      │
│  ┌──────────────┐   │                   │  ┌──────────────┐  ┌──────────────┐  │
│  │    SoSP      │ - - - - - - - - - - > │  │   RECEIVER   │  │    MIMO      │  │
│  │   LABELER    │   │                   │  │     131      │  │  EQUALIZER   │  │
│  │    111       │   │                   │  │              │  │    139       │  │
│  └──────────────┘   │      SDM          │  └──────────────┘  └──────────────┘  │
│                     │     FIBER         │                                      │
│                     │      120          │                                      │
└─────────────────────┘                   └──────────────────────────────────────┘
```

*FIG. 2*

FIG. 3

SoSP LABELER
300

SoSP-LABELED
SIGNAL
360

j  90° PHASE SHIFT

SoSP
LABELS
310

IM
SIGNALS
320

FIG. 4

400

401
START

410
COMBINE A SET OF WAVELENGTH CHANNELS, BASED ON
A RESPECTIVE SET OF STATES OF SPATIAL MODE AND
POLARIZATION (SoSPs), TO FORM A COMBINED OPTICAL
SIGNAL, WHEREIN THE WAVELENGTH CHANNELS ARE
COMBINED IN A MANNER FOR ASSOCIATING THE RESPECTIVE
SoSPs WITH THE WAVELENGTH CHANNELS

420
PROPAGATE THE COMBINED OPTICAL SIGNAL FOR
PROPAGATION OVER AN OPTICAL NETWORK

499
END

EP 4 757 209 A1

*FIG. 5*

RECEIVER
500

FIG. 6

GENERALIZED
STOKES
RECEIVER
600

PORT
640-1

POLARIZATION
SPLITTER
630-1

MODE 1

X-POL

Y-POL

PORT
640-2

SoSP-LABELED
SIGNAL
610

SPATIAL MODE
SPLITTER
620

PORT
640-3

X-POL

Y-POL

MODE 2

POLARIZATION
SPLITTER
630-2

PORT
640-4

90°
OPTICAL
HYBRID
650-1

90°
OPTICAL
HYBRID
650-2

90°
OPTICAL
HYBRID
650-3

90°
OPTICAL
HYBRID
650-4

90°
OPTICAL
HYBRID
650-5

90°
OPTICAL
HYBRID
650-6

PD
BPD
BPD

BPD
BPD
PD

BPD
BPD
PD

PD
BPD
BPD

BPD
BPD
PD

BPD
BPD

OUTPUT
SIGNALS
670

DETECTORS
660

*FIG. 7*

700

701

START

710

RECEIVE, BY A RECEIVER, A COMBINED OPTICAL SIGNAL
INCLUDING A SET OF WAVELENGTH CHANNELS

720

GENERATE, BY THE RECEIVER BASED ON A RESPECTIVE SET
OF STATES OF SPATIAL MODE AND POLARIZATION (SoSPs)
ASSOCIATED WITH THE WAVELENGTH CHANNELS,
A SET OF SIGNALS

730

RECOVER, BY A MULTIPLE INPUT MULTIPLE OUTPUT
(MIMO) EQUALIZER BASED ON PROCESSING OF THE SET
OF SIGNALS USING A MIMO EQUALIZATION PROCESS, THE
SET OF WAVELENGTH CHANNELS

799

END

*FIG.* 8

800

COOPERATING
ELEMENT
805

INPUT/OUTPUT
DEVICE
806

PROCESSOR
802

MEMORY
804

Europäisches
Patentamt
European
Patent Office
Office européen
des brevets

**EUROPEAN SEARCH REPORT**

**Application Number**

EP 25 22 0632

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 503 435 A1 (NOKIA SOLUTIONS & NETWORKS OY [FI]) 26 June 2019 (2019-06-26) * the whole document * | 1-15 | INV. H04B10/516 H04J14/00 H04J14/06 H04Q11/00 |
| X | EP 2 556 606 B1 (ALCATEL LUCENT [FR]) 8 August 2018 (2018-08-08) * paragraph [0051] - paragraph [0055]; figures 3C, 3D,4B,4C * * paragraph [0073] - paragraph [0081] * | 1-15 | |
| X | WANG WEI ET AL: "4x10 Gb/s polarization- and mode group-multiplexing for data center applications", 2017 CONFERENCE ON LASERS AND ELECTRO-OPTICS (CLEO) THE OPTICAL SOCIETY, 14 May 2017 (2017-05-14), pages 1-2, XP033239097, [retrieved on 2017-10-25] * the whole document * | 1-15 | |
| A | ZHANG JIANBO ET AL: "Fiber Vector Eigenmode Multiplexing Based High Capacity Transmission Over 5-km FMF With Kramers-Kronig Receiver", JOURNAL OF LIGHTWAVE TECHNOLOGY IEEE, USA, vol. 39, no. 15, 11 May 2021 (2021-05-11), pages 4932-4938, XP011866374, ISSN: 0733-8724, DOI: 10.1109/JLT.2021.3078893 [retrieved on 2021-07-15] * the whole document * | 1-15 | **TECHNICAL FIELDS SEARCHED (IPC)** H04B H04J H04Q |

The present search report has been drawn up for all claims

| Place of search | Date of completion of the search | Examiner |
|---|---|---|
| Munich | 10 April 2026 | Gäde, Sebastian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 22 0632

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2026

| Patent document cited in search report | | Publication date | Patent family member(s) | | Publication date |
|---|---|---|---|---|---|
| EP 3503435 | A1 | 26-06-2019 | NONE | | |
| EP 2556606 | B1 | 08-08-2018 | CN | 102835044 A | 19-12-2012 |
| | | | EP | 2556606 A2 | 13-02-2013 |
| | | | JP | 5665967 B2 | 04-02-2015 |
| | | | JP | 2013526137 A | 20-06-2013 |
| | | | KR | 20120135309 A | 12-12-2012 |
| | | | PL | 2556606 T3 | 29-03-2019 |
| | | | SG | 184461 A1 | 29-11-2012 |
| | | | TW | 201233084 A | 01-08-2012 |
| | | | WO | 2011126814 A2 | 13-10-2011 |

EPO FORM P0459

For more details about this annex : see Official Journal of the European Patent Office, No. 12/82